(19) **Europäisches Patentamt**

**European Patent Office**

**Office européen des brevets**

(11) **EP 1 160 729 A2**

(12) **EUROPEAN PATENT APPLICATION**

(43) Date of publication:
**05.12.2001  Bulletin 2001/49**

(51) Int Cl.$^7$: **G06T 7/40**

(21) Application number: **01303087.9**

(22) Date of filing: **30.03.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **31.05.2000  US 207958 P**
**21.08.2000  KR 2000048324**

(71) Applicants:
  • **SAMSUNG ELECTRONICS CO. LTD.**
    **Suwon-city, Kyungki-do (KR)**
  • **THE REGENTS OF THE UNIVERSITY OF CALIFORNIA**
    **Oakland, California 94607-5200 (US)**

(72) Inventors:
  • **Shin,Hyun-doo,**
    **510-1302 Mugigae Maeul Cheongku Apt**
    **Seongnam-city, Kyungki-do (KR)**
  • **Choi, Yang-lim,**
    **102-1112 Wooman Sunkyung Apt.**
    **Suwon-city, Kyungki-do (KR)**
  • **Wu, Peng,**
    **Dpt. Electrical and Computer Engineering**
    **Santa Barbara, CA 93106-9560 (US)**
  • **Manjunath, Bangalore,**
    **Department of Electrical and**
    **Santa Barbara, CA 93106-9560 (US)**

(74) Representative: **Geary, Stuart Lloyd et al**
    **Venner, Shipley & Co.,**
    **20 Little Britain**
    **London EC1A 7DH (GB)**

(54) **Method and device for measuring similarity between images**

(57)    A method of measuring a similarity between images is provided. The method includes the steps of (a) computing a statistical dissimilarity between the images; (b) computing a perceptual dissimilarity between the images; and (c) computing a dissimilarity between the texture features of the images based on the statistical dissimilarity and the perceptual dissimilarity. When images perceptually similar to a query image are searched and retrieved according to the above measuring method, the possibility that the retrieved images are not perceptually similar to the query image is small. Accordingly, the image searching performance can be improved when searching images having texture features similar to that of a query image.

**Description**

The present invention relates to a method and a device for measuring the similarity between.

For applications of image search and retrieval, the characterization of the statistical attribute of textures is widely used. Texture descriptors are obtained according to such characterization. A texture descriptor is composed of two components: a similarity retrieval component (SRC) based on statistics and a perceptual browsing component (PBC) which is developed for describing the perceptual attributes of textures, such as the directionality and the texture's regularity. Such a texture descriptor is used for browsing and classifying images. The browsing of images and the classifying of images are based on a measure of a distance. The measure of a distance is defined based on a feature vector and provides the similarity/dissimilarity between images.

A conventional similarity measuring method uses a statistical-based texture descriptor. According to this method, when the radius of a sphere centered at the feature vector of a query image is expanded in a feature vector space, if other feature vectors fall within the sphere, it is determined that the possibility that the query image is perceptually similar to the texture features of images corresponding to the feature vectors is very high.

However, for images corresponding to feature vectors newly falling within the sphere when the radius of the sphere is continuously increased in such a conventional similarity measuring method, the possibility that they are perceptually similar to the query image drops rapidly. Accordingly, the conventional similarity measuring method using a statistical-based texture descriptor has a problem in that an image which has been retrieved as being perceptually similar to a query image may not have a perceptual similarity to the query image.

According to the present invention, there is provided a method of measuring a similarity between texture features of images, the method comprising the steps of:

   (a) computing a statistical dissimilarity between the images;
   (b) computing a perceptual dissimilarity between the images; and
   (c) computing a dissimilarity between the texture features of the images based on the statistical dissimilarity and the perceptual dissimilarity.

Preferably, the step (b) comprises the steps of:

   (b-1) computing regularity of the texture of the images; and
   (b-2) computing a dissimilarity between the computed regularities of texture of the images.

Preferably, the step (c) comprises the steps of (c-1) determining the dissimilarity between the texture features as a value proportional to the statistical dissimilarity when the perceptual dissimilarity is smaller than a predetermined threshold or the steps of (c-1) determining the dissimilarity between the texture features based on the exponent of the power of the statistical dissimilarity, the exponent being the perceptual dissimilarity, when the perceptual dissimilarity is smaller than a predetermined threshold.

According to the present invention, there is also provided a method of measuring a similarity between texture features of images, the method comprising the steps of:

   (a) computing a statistical dissimilarity $d(i, j)$ between two images $i$ and $j$ using a statistical-based texture descriptor;
   (b) obtaining quantitative measurements $P^{(i)}$ and $P^{(j)}$ of texture patterns of the two images $i$ and $j$ in terms of regularity; and
   (c) obtaining a dissimilarity between the texture features by computing a dissimilarity $\hat{d}(|P^{(i)} - P^{(j)}|)$ between the texture patterns of the two images $i$ and $j$ in terms of regularity, where d is assumed to be a predetermined function whose value is determined according to the range of a magnitude of a perceptual dissimilarity.

Preferably, the step (c) comprises the step of (c-1) computing a dissimilarity $D(i, j)$ between the texture features of the two images $i$ and $j$ in accordance with the equation $D(i,j) = d(i,j) + d(i,j)^{\hat{d}(P^{(i)}, P^{(j)})}$ using statistical dissimilarity data and regularity-dissimilarity data, when it is assumed that $\alpha$ is a predetermined scaling factor, and $d$ is a function defined as

$$\hat{d}\left(P^{(i)}, P^{(j)}\right) = \begin{cases} 0 & \left|P^{(i)} - P^{(j)}\right| \leq 1 \\ \left|P^{(i)} - P^{(j)}\right| \leq 1 & \left|P^{(i)} - P^{(j)}\right| > 1 \end{cases}$$

According to the present invention, there is further provided a computer-readable recording medium storing a computer program for executing a method of measuring a similarity between texture features of images, wherein the method comprises the steps of:

(a) computing a statistical dissimilarity $d(i, j)$ between two images i and j using a statistical-based texture descriptor;
(b) obtaining quantitative measurements $P^{(i)}$ and $P^{(j)}$ of texture patterns of the two images i and j in terms of regularity; and
(c) obtaining a dissimilarity between the texture features by computing a dissimilarity $\hat{d}(|P^{(i)} - P^{(j)}|)$ between the texture patterns of the two images $i$ and $j$ in terms of regularity, where $d$ is assumed to be a predetermined function whose value is determined according to the range of a magnitude of a perceptual dissimilarity.

Preferably, the method further comprises the step (d) computing a dissimilarity $D(i, j)$ between the texture features of the two images i and j in accordance with the equation $D(i, j) = d(i, j) + d(i, j)^{\alpha \hat{d}(P^{(i)}, P^{(j)})}$ using statistical dissimilarity data and regularity-dissimilarity data, when it is assumed that $\alpha$ is a predetermined scaling factor, and 0 is a function defined as

$$\hat{d}\left(P^{(i)}, P^{(j)}\right) = \begin{cases} 0 & \left|P^{(i)} - P^{(j)}\right| \leq 1 \\ \left|P^{(i)} - P^{(j)}\right| \leq 1 & \left|P^{(i)} - P^{(j)}\right| > 1 \end{cases}$$

A device for measuring a similarity between texture features of images, the device comprising:

a statistical dissimilarity computing part for computing a statistical dissimilarity between the images;
a perceptual dissimilarity computing part for computing a perceptual dissimilarity between the images; and
a texture feature dissimilarity computing part for computing a dissimilarity between the texture features of the images based on the statistical dissimilarity and the perceptual dissimilarity.

Preferably, the perceptual dissimilarity computing part quantitatively computes the perceptual attributes of texture of the images.
Preferably, the perceptual dissimilarity computing part comprises:

a texture regularity measurer for quantitatively measuring regularity of texture as a perceptual attribute of the texture; and
a regularity-dissimilarity computing part for computing a dissimilarity between texture patterns in terms of regularity.

Preferably, the texture regularity measurer obtains quantitative measurements $P^{(i)}$ and $P^{(j)}$ of textures patterns of the two images $i$ and $j$ in terms of regularity, and the regularity-dissimilarity computing part obtains a dissimilarity between the texture features by computing a dissimilarity $\hat{d}(|P^{(i)} - P^{(j)}|)$ of the texture patterns of the two images i and j in terms of regularity when $d$ is assumed to be a predetermined function whose value is determined according to the range of a magnitude of a perceptual dissimilarity.
Preferably, the texture feature dissimilarity computing part computes a dissimilarity $D(i, j)$ of the texture features of the two images $i$ and $j$ in accordance with $D(i, j) = d(i, j) + d(i, j)^{\alpha \hat{d}(P^{(i)}, P^{(j)})}$ using statistical dissimilarity data and regularity-dissimilarity data, when it is assumed that $\alpha$ is a predetermined scaling factor, and $d$ is a function defined as

$$\hat{d}\left(P^{(i)}, P^{(j)}\right) = \begin{cases} 0 & \left|P^{(i)} - P^{(j)}\right| \leq 1 \\ \left|P^{(i)} - P^{(j)}\right| \leq 1 & \left|P^{(i)} - P^{(j)}\right| > 1 \end{cases}$$

Embodiments of the present invention will now be described, by way of example, with reference to the accompanying drawings, in which:-

Figure 1 is a block diagram illustrating the configuration of a device for measuring the similarity between images according to the present invention;

Figure 2 is a flowchart illustrating the main steps of a method of measuring the similarity between images, which is performed in the device of Figure 1; and

Figure 3 is a diagram illustrating a framework of measuring the similarity between two images.

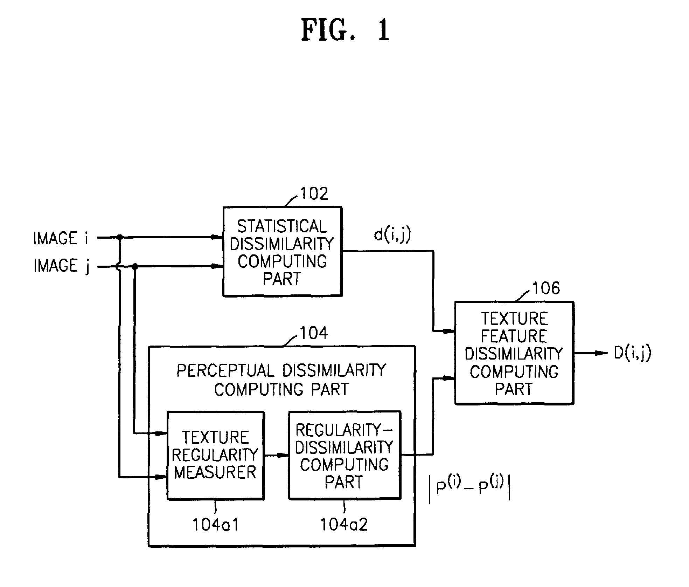

Referring to Figure 1, a device for measuring the similarity between images according to the present invention includes a statistical dissimilarity computing part 102, a perceptual dissimilarity computing part 104 and a texture feature dissimilarity computing part 106. The perceptual dissimilarity computing part 104 includes a texture regularity measurer 104a1 and a regularity-dissimilarity computing part 104a2.

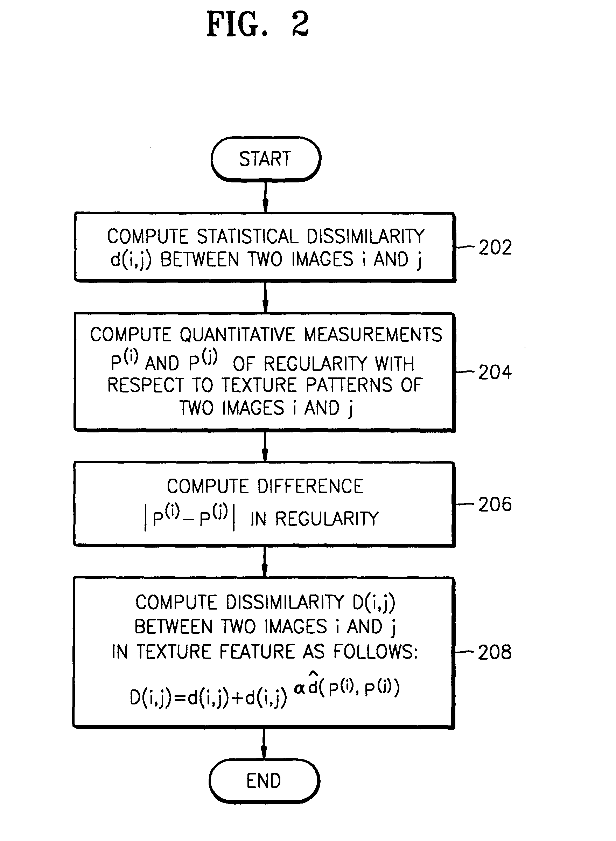

Referring to Figure 2, in the operation of the device of Figure 1, the statistical dissimilarity computing part 102 computes the statistical dissimilarity between two images i and j using a statistical-based texture descriptor in step 202. The computed dissimilarity is represented by d(i, j).

Next, the texture regularity measurer 104a1 in the perceptual dissimilarity computing part 104 quantitatively measures the perceptual attribute of texture. In this embodiment, the texture regularity measurer 104a1 quantitatively measures the regularity of texture as the perceptual attribute of the texture. In other words, in step 204, the texture regularity measurer 104a1 obtains quantitative measurements $P^{(i)}$ and $P^{(j)}$ of regularity with respect to the texture pattern of the two images i and j. The quantitative measurements $P^{(i)}$ and $P^{(j)}$ are integers within a certain range. Larger values of the quantitative measurements $P^{(i)}$ and $P^{(j)}$ indicate stronger regularities of the texture. The regularities of the two images i and j can be computed using the quantitative measurements of the perceptual attribute of the texture. A method of obtaining a texture descriptor containing a perceptual browsing component (PBC) by extracting the PBC based on a quantitative measurement of a perceptual attribute of texture is disclosed in WO-A-0057359.

Next, in step 206, the regularity-dissimilarity computing part 104a2 computes the dissimilarity between the texture patterns of the two images i and j in terms of regularity and outputs regularity-dissimilarity data $|P^{(i)} - P^{(j)}|$ as the result.

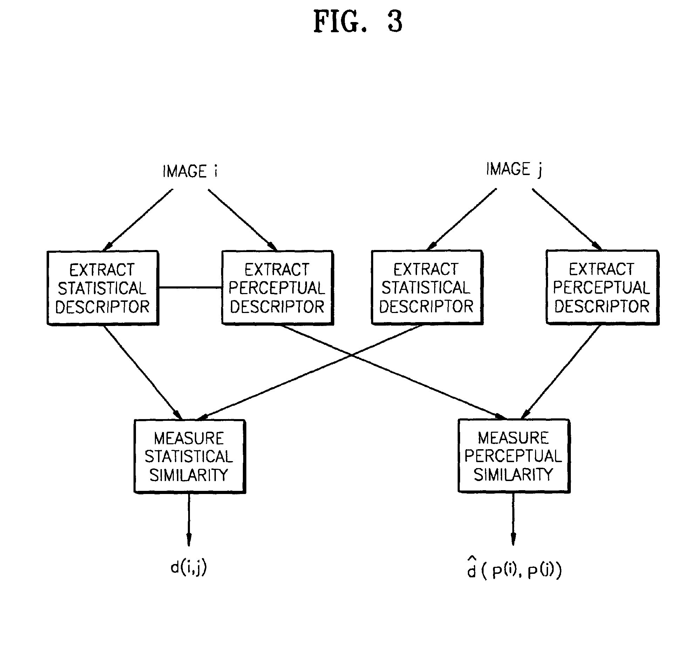

Referring to Figure 3, the statistical components and the perceptual components of the images i and j are obtained. The statistical dissimilarity $d(i, j)$ and the perceptual dissimilarity $\hat{d}(P^{(i)}, P^{(j)})$ of the two images i and j are obtained. In this embodiment, the perceptual dissimilarity $\hat{d}(P^{(i)}, P^{(j)})$ is obtained from the regularity of texture features.

The texture feature dissimilarity computing part 106 computes the dissimilarity between texture features of the two images using the statistical dissimilarity data output from the statistical dissimilarity computing part 102 and the regularity-dissimilarity data output from the regularity-dissimilarity computing part 104a2. In this embodiment, assuming $\alpha$ is a predetermined scaling factor, the dissimilarity $D(i, j)$ of texture features of the two images i and j is computed by Equation (1) in step 208.

$$D(i, j) = d(i, j) + d(i, j)^{\alpha \hat{d}(P^{(i)}, P^{(j)})} \qquad (1)$$

Here, $d(i, j)$ indicates a dissimilarity computed using a statistical-based texture descriptor, $\hat{d}$ indicates a predetermined function whose value is determined depending on the range of magnitude of the perceptual dissimilarity, and $\hat{d}(P^{(i)}, P^{(j)})$ indicates the measurement of dissimilarity between the texture patterns of the two images i and j in terms of regularity. For example, the computation of $\hat{d}$ is defined by:-

$$\hat{d}(P^{(i)}, P^{(j)}) = \begin{cases} 0 & |P^{(i)} - P^{(j)}| \leq 1 \\ |P^{(i)} - P^{(j)}| \leq 1 & |P^{(i)} - P^{(j)}| > 1 \end{cases} \qquad (2)$$

The results of measuring the similarity between images using Equation 1 according to the similarity measuring method in different circumstances will now be described.

First, according to the present invention, when a statistical dissimilarity and a perceptual dissimilarity exceed a predetermined threshold, the dissimilarity between texture features is determined by at least the sum of the statistical dissimilarity and the perceptual dissimilarity. Assuming that the image j is an object to be measured and the image i is a query image in this embodiment, if the statistical dissimilarity $d(i, j)$ and the perceptual dissimilarity between the two images i and j are both large, that is, if $|P^{(i)} - P^{(j)}| > 1$, $d(i, j)^{\alpha \hat{d}(P^{(i)}, P^{(j)})}$ increases exponentially. Accordingly, the dissimilarity $D(i, j)$ of texture patterns of the two images i and j rapidly increases, which means that the image j is very different from the image *i* in terms of the regularity of a texture feature.

Second, according to the present invention, when a perceptual dissimilarity is smaller than the predetermined threshold, the dissimilarity between texture features is determined by a value proportional to a statistical dissimilarity. When the perceptual dissimilarity between the two images *i* and *j* is small in this embodiment, that is, when $\left|P^{(i)}-P^{(j)}\right|\leq 1$, the magnitude of an exponent term, $d(i,j)^{\alpha\left|P^{(i)},P^{(j)}\right|}$, drops very fast and approaches 0. Accordingly, the dissimilarity *D(i, j)* of texture patterns approaches the statistical dissimilarity *d(i, j).*

Third, when a statistical dissimilarity is smaller than the predetermined threshold, but a perceptual dissimilarity exceeds the predetermined threshold, the dissimilarity between texture features is partially determined depending on the perceptual dissimilarity. When the statistical dissimilarity *d(i, j)* is small but the perceptual dissimilarity is large, that is, when |$P^{(i)}$ - $P^{(j)}$| > 1, the dissimilarity *D(i, j)* of texture patterns is determined by the exponent of the power of the statistical dissimilarity, wherein the exponent is the perceptual dissimilarity. However, since the statistical dissimilarity is relatively small, the dissimilarity between the texture features is only slightly influenced by the perceptual dissimilarity.

According to a method of measuring the similarity between images described above, the dissimilarity between texture features of the images is determined using the statistical dissimilarity and the perceptual dissimilarity between the texture features. When images perceptually similar to a query image are searched and retrieved according to the above measuring method, the possibility that the retrieved images are not perceptually similar to the query image is small. Accordingly, the present invention can improve the image searching performance when searching images having texture features similar to that of a query image. It is preferable that such a method of measuring the similarity between images according to the present invention is applied to content-based image searching.

Since when a dissimilarity is large, a similarity is small, but when a dissimilarity is small, a similarity is large, measuring of a dissimilarity is equivalent to measuring a similarity. Accordingly, the present invention is referred to as a similarity measuring method although it measures a dissimilarity.

A method of measuring the similarity between images according to the present invention can be written as a program which can be executed in a personal computer or a server computer. Program codes and code segments constructing the programs can be easily inferred by computer programmers skilled in this art. The programs can be stored in a computer-readable recording medium. The computer-readable medium can be a magnetic recording medium or an optical recording medium. The program codes may also be transmitted by means of electric and electromagnetic signals.

**Claims**

1. A method of measuring a similarity between texture features of images, the method comprising the steps of:

    (a) computing a statistical dissimilarity between the images;
    (b) computing a perceptual dissimilarity between the images; and
    (c) computing a dissimilarity between the texture features of the images based on the statistical dissimilarity and the perceptual dissimilarity.

2. The method of claim 1, wherein the step (b) comprises the steps of:

    (b-1) computing regularity of the texture of the images; and
    (b-2) computing a dissimilarity between the computed regularities of texture of the images.

3. The method of claim 1, wherein the step (c) comprises the steps of (c-1) determining the dissimilarity between the texture features as a value proportional to the statistical dissimilarity when the perceptual dissimilarity is smaller than a predetermined threshold.

4. The method of claim 1, wherein the step (c) comprises the steps of (c-1) determining the dissimilarity between the texture features based on the exponent of the power of the statistical dissimilarity, the exponent being the perceptual dissimilarity, when the perceptual dissimilarity is smaller than a predetermined threshold.

5. A method of measuring a similarity between texture features of images, the method comprising the steps of:

    (a) computing a statistical dissimilarity d(i, j) between two images i and j using a statistical-based texture descriptor;
    (b) obtaining quantitative measurements $P^{(i)}$ and $P^{(j)}$ of texture patterns of the two images i and j in terms of regularity; and

(c) obtaining a dissimilarity between the texture features by computing a dissimilarity $\hat{d}\left(\left|P^{(i)}-P^{(j)}\right|\right)$ between the texture patterns of the two images *i* and *j* in terms of regularity, where *d* is assumed to be a predetermined function whose value is determined according to the range of a magnitude of a perceptual dissimilarity.

6. The method of claim 5, wherein the step (c) comprises the step of (c-1) computing a dissimilarity *D(i, j)* between the texture features of the two images *i* and *j* in accordance with the equation $D(i,j)=d(i,j)+d(i,j)^{\alpha\hat{d}\left(P^{(i)},P^{(j)}\right)}$ using statistical dissimilarity data and regularity-dissimilarity data, when it is assumed that $\alpha$ is a predetermined scaling factor, and *d* is a function defined as

$$\hat{d}\left(P^{(i)},P^{(j)}\right)=\begin{cases} 0 & \left|P^{(i)}-P^{(j)}\right|\leq 1 \\ \left|P^{(i)}-P^{(j)}\right|\leq 1 & \left|P^{(i)}-P^{(j)}\right|>1 \end{cases}$$

7. A computer-readable recording medium storing a computer program for executing a method of measuring a similarity between texture features of images, wherein the method comprises the steps of:

   (a) computing a statistical dissimilarity *d(i, j)* between two images i and j using a statistical-based texture descriptor;
   (b) obtaining quantitative measurements $P^{(i)}$ and $P^{(j)}$ of texture patterns of the two images i and j in terms of regularity; and
   (c) obtaining a dissimilarity between the texture features by computing a dissimilarity $\hat{d}\left(\left|P^{(i)}-P^{(j)}\right|\right)$ between the texture patterns of the two images *i* and *j* in terms of regularity, where *d* is assumed to be a predetermined function whose value is determined according to the range of a magnitude of a perceptual dissimilarity.

8. The computer-readable recording medium of claim 7, wherein the method further comprises the step (d) computing a dissimilarity *D(i, j)* between the texture features of the two images *i* and *j* in accordance with the equation $D(i,j)=d(i,j)+d(i,j)^{\alpha\hat{d}\left(P^{(i)},P^{(j)}\right)}$ using statistical dissimilarity data and regularity-dissimilarity data, when it is assumed that $\alpha$ is a predetermined scaling factor, and 0 is a function defined as

$$\hat{d}\left(P^{(i)},P^{(j)}\right)=\begin{cases} 0 & \left|P^{(i)}-P^{(j)}\right|\leq 1 \\ \left|P^{(i)}-P^{(j)}\right|\leq 1 & \left|P^{(i)}-P^{(j)}\right|>1 \end{cases}$$

9. A device for measuring a similarity between texture features of images, the device comprising:

   a statistical dissimilarity computing part for computing a statistical dissimilarity between the images;
   a perceptual dissimilarity computing part for computing a perceptual dissimilarity between the images; and
   a texture feature dissimilarity computing part for computing a dissimilarity between the texture features of the images based on the statistical dissimilarity and the perceptual dissimilarity.

10. The device of claim 9, wherein the perceptual dissimilarity computing part quantitatively computes the perceptual attributes of texture of the images.

11. The device of claim 9, wherein the perceptual dissimilarity computing part comprises:

   a texture regularity measurer for quantitatively measuring regularity of texture as a perceptual attribute of the texture; and
   a regularity-dissimilarity computing part for computing a dissimilarity between texture patterns in terms of regularity.

12. The device of claim 11, wherein the texture regularity measurer obtains quantitative measurements $P^{(i)}$ and $P^{(j)}$ of textures patterns of the two images *i* and *j* in terms of regularity, and the regularity-dissimilarity computing part obtains a dissimilarity between the texture features by computing a dissimilarity $\hat{d}\left(\left|P^{(i)}-P^{(j)}\right|\right)$ of the texture patterns of the two images i and j in terms of regularity when *d* is assumed to be a predetermined function whose value is determined according to the range of a magnitude of a perceptual dissimilarity.

13. The device of claim 9, wherein the texture feature dissimilarity computing part computes a dissimilarity $D(i, j)$ of the texture features of the two images $i$ and $j$ in accordance with $D(i,j) = d(i,j) + d(i,j)^{\alpha \hat{d}(P^{(i)}, P^{(j)})}$ using statistical dissimilarity data and regularity-dissimilarity data, when it is assumed that $\alpha$ is a predetermined scaling factor, and $d$ is a function defined as

$$\hat{d}\left(P^{(i)}, P^{(j)}\right) = \begin{cases} 0 & \left|P^{(i)} - P^{(j)}\right| \leq 1 \\ \left|P^{(i)} - P^{(j)}\right| \leq 1 & \left|P^{(i)} - P^{(j)}\right| > 1 \end{cases}$$

# FIG. 1

IMAGE i ——————→

IMAGE j ——————→

102

STATISTICAL
DISSIMILARITY
COMPUTING
PART

d(i,j) ——————→

106

TEXTURE
FEATURE
DISSIMILARITY
COMPUTING
PART

——→ D(i,j)

104

PERCEPTUAL DISSIMILARITY
COMPUTING PART

TEXTURE
REGULARITY
MEASURER

REGULARITY-
DISSIMILARITY
COMPUTING
PART

$\left| P^{(i)} - P^{(j)} \right|$

104a1          104a2

# FIG. 2

START

↓

COMPUTE STATISTICAL DISSIMILARITY
$d(i,j)$ BETWEEN TWO IMAGES i AND j — 202

↓

COMPUTE QUANTITATIVE MEASUREMENTS
$P^{(i)}$ AND $P^{(j)}$ OF REGULARITY WITH
RESPECT TO TEXTURE PATTERNS OF
TWO IMAGES i AND j — 204

↓

COMPUTE DIFFERENCE
$\left| P^{(i)} - P^{(j)} \right|$ IN REGULARITY — 206

↓

COMPUTE DISSIMILARITY $D(i,j)$
BETWEEN TWO IMAGES i AND j
IN TEXTURE FEATURE AS FOLLOWS: — 208

$$D(i,j) = d(i,j) + d(i,j)^{\alpha \hat{d}(P^{(i)}, P^{(j)})}$$

↓

END

# FIG. 3

IMAGE i                                    IMAGE j

| EXTRACT STATISTICAL DESCRIPTOR | EXTRACT PERCEPTUAL DESCRIPTOR | EXTRACT STATISTICAL DESCRIPTOR | EXTRACT PERCEPTUAL DESCRIPTOR |

MEASURE STATISTICAL SIMILARITY

MEASURE PERCEPTUAL SIMILARITY

$d(i,j)$

$\hat{d}(\, p(i),\, p(j))$